# EUROPÄISCHE PATENTSCHRIFT

(11) **EP 1 178 586 B1**
(45) Veröffentlichungstag und Bekanntmachung des Hinweises auf die Patenterteilung: **07.01.2004**
(21) Anmeldenummer: 00810697.3
(22) Anmeldetag: 02.08.2000
(51) Int. Cl.: H02K 3/34

(54) **Nutisolation**
Sleeve insulation
Isolation des rainures

(43) Veröffentlichungstag der Anmeldung: 06.02.2002
(73) Patentinhaber: MICAFIL AG, 8048 Zürich (CH)
(72) Erfinder: Berl, Wolfgang, 79772 Klettgau (DE); Piur, Armin, 8957 Spreitenbach (CH); Schulz, Daniel, 8802 Kilchberg (CH)
(74) Vertreter: ABB Patent Attorneys

(56) Entgegenhaltungen:
- DE-C- 4 023 903
- US-A- 4 162 340
- PATENT ABSTRACTS OF JAPAN vol. 008, no. 004 (E-220), 10. Januar 1984 (1984-01-10) -& JP 58 170333 A (TOKYO SHIBAURA DENKI KK), 6. Oktober 1983 (1983-10-06)
- PATENT ABSTRACTS OF JAPAN vol. 008, no. 004 (E-220), 10. Januar 1984 (1984-01-10) -& JP 58 170332 A (TOKYO SHIBAURA DENKI KK), 6. Oktober 1983 (1983-10-06)

## Beschreibung

Bei der Erfindung wird ausgegangen von einem Isolierkanal aus einem schichtförmig aufgebauten und nach Art eines L geformten Werkstoff nach dem Oberbegriff von Patentanspruch 1. Ein solcher L-förmiger Isolierkanal kann mit einem weiteren L-förmigen Isolierkanal unter Bildung eines U-förmigen Isolierkanals in eine Nut eines Rotors einer rotierenden elektrischen Maschine, beispielsweise eines Generators, eingeschoben werden. Einen nachfolgend in die Nut eingeschobenen elektrischen Leiter isoliert der als Nutisolation wirkende U-förmige Isolierkanal gegenüber dem auf Erde gelegten Rotor. Für den Isolierkanal verwendete Werkstoffe umfassen flexible Kunststoffpapiere, vorzugsweise auf der Basis von Polyamiden, wie etwa Papiere, wie sie unter der Markennamen Nomex^{R} vertrieben werden, Glasfasern, Epoxydharze, Polyimidfolien, etwa solche, wie sie unter dem Markennamen Kapton^{R} in den Handel kommen, sowie Polyesterfolie. Diese Werkstoffe werden gebenenfalls einzeln, vorzugsweise jedoch in Kombination mit einem oder mehreren der genannten Werkstoffe verwendet. Neben diesen vielen Werkstoffkombinationen weisen die Kanäle je nach den geometrischen Abmessungen der Nut ganz unterschiedliche Masse auf. Daher sind am Markt Isolierkanäle mit den verschiedensten Nutformen und Werkstoffkombinationen zu finden.

Die Hersteller der Nutisolation fertigen die Kanäle passgenau, entsprechend der Nutgeometrie. Die Vielzahl der Nutgeometrien erfordern eine grosse Menge an Pressformen. Üblicherweise muss für jede Geometrie eine eigene Form hergestellt werden. Im Hinblick auf standardisierte Rotoren mit grossen Stückzahlen sind die Formkosten nicht relevant. Bei kleinen Serien können die Kosten der Pressformen jedoch eine entscheidende Rolle spielen. Vor allem im Reparaturgeschäft, also dort, wo Rotoren innert kurzer Zeit demontiert und neu isoliert werden, spielen die Formkosten und vor allem die Lieferzeit eine ganz entscheidende Rolle. Oftmals sind die Nutgeometrien dem Auftragnehmer nicht bekannt (Fremdprodukt, alte Maschine etc) und können deswegen erst nach der Demontage der Kupferleiter bestimmt werden. Jedoch müssen die die Nutisolation bewirkenden Isolierkanäle als erstes in die zu reparierende Maschine eingebaut werden. Daher ist es wichtig, dass die für die erwünschte Nutisolation benötigten Isolierkanäle rasch verfügbar sind.

### STAND DER TECHNIK

Ein L-förmig ausgebildeter Isolierkanal nach dem Oberbegriff von Patentanspruch 1 ist beispielsweise in DE 196 10 236 A1 beschrieben. Eine aus zwei solchen Isolierkanälen gebildete Nutisolation weist im wesentlichen U-förmigen Querschnitt auf. Die Schenkel des U werden von den beiden jeweils an der Basis der L ansetzenden, nach oben geführten Schenkeln der beiden Isolierkanäle gebildet. Die Basis des U bilden hingegen die beiden sich überlappenden Basisabschnitte der beiden Isolierkanäle. Als Werkstoff für die Isolierkanäle werden flexible Kunststoffpapiere oder faserverstärkte Kunststofflaminate verwendet. Die Breite der Basisabschnitte der beiden Isolierkanäle ist bestimmt durch die Breite der Nutisolation. Daher werden zunächst Nutkanäle mit entsprechend bemessener Breite der Basisabschnitte hergestellt und die Basisabschnitte abgeschliffen, um so beim Einbau in die Nut eine gleichmässig dicke und praktisch hohlraumfreie Nutisolation zu erhalten. Eine solche Nutisolation ist jedoch verhältnismässig aufwendig.

Ein weiterer U- oder L-förmiger Isolierkanal nach dem Oberbegriff des Patentanspruchs 1 ist in US 4 162 340 beschrieben. Hierbei ist eine Verstärkung des Kanalbodens durch faserverstärkten Kunststoff vorgesehen und der an den Kanalboden angrenzende Teil wird durch aus der Verstärkung herausfließendes Harz verstärkt.

### DARSTELLUNG DER ERFINDUNG

Der Erfindung, wie sie in den Patentansprüchen definiert ist, liegt die Aufgabe zugrunde, einen Isolierkanal der eingangs genannten Art anzugeben, mit dem in wirtschaftlich günstiger Weise Nutisolationen mit nahezu beliebiger Geometrie hergestellt werden können, welche für die meisten Anwendungen ausreichend gute mechanische und dielektrische Eigenschaften aufweisen.

Beim Isolierkanal nach der Erfindung ist die als Kanalboden dienende Basis des L steif und der als Kanalwand dienende Schenkel des L flexibel ausgebildet und ist in den Kanalboden eine versteifende Einlage eingebracht, welche in den an den Kanalboden anschliessenden Teil der Kanalwand geführt ist. Aus zwei dieser Isolierkanäle kann nun durch einfaches Einsetzen dieser beiden Kanäle in eine Nut in äusserst kostengünstiger Weise eine Nutisolation mit guten mechanischen und elektrischen Eigenschaften gebildet werden. Die Nutisolation weist einen auf dem Nutgrund aufliegenden steifen Kanalboden auf sowie flexibel ausgebildete und daher gut verformbare Kanalwände, welche sich praktisch an jede beliebige Nutform, gleichgültig ob sie abgewinkelt oder abgestuft ausgeführt ist, anpassen lassen. Hierbei ist es fertigungstechnisch günstig, dass die Breite der Böden der Isolierkanäle vorm Einsetzen in die Nut, etwa durch Sägen, Schneiden oder Stanzen, auf Nutbreite abgelängt werden kann. Eine Vielzahl von Nutisolationen mit unterschiedlichen Breiten und unterschiedlichen Profilen kann so aus gleichartig ausgebildeten Isolierkanälen gefertigt werden, die in lediglich einer einzigen Pressform hergestellt wurden. Von besonderem Vorteil ist es hierbei, dass die Einlage in den an den Kanalboden anschliessenden Teil der Kanalwand geführt ist. In der aus zwei dieser Isolierkanäle gebildeten U-förmigen Nutisolation weisen dann die an den Übergängen zwischen der Basis und den Schenkeln des U befindlichen Radien eine hohe Festigkeit auf. Während des Betriebs einer rotierenden elektrischen Maschine, in deren Rotor eine derart gefertigte Nutisolation eingesetzt ist, wird so ein Auswandern der Nutisolation aufgrund von Zentrifugalkräften mit grosser Sicherheit vermieden.

Aus fertigungstechnischer und dielektrischer Sicht als besonders vorteilhaft erwiesen hat es sich, dass der Werkstoff der Isolierkanäle mindestens zwei im Kanalboden und in der Kanalwand vorgesehene Schichten aus flexiblem Isoliermaterial umfasst, zwischen denen im Kanalboden die die Schichten versteifende Einlage vorgesehen ist.

Wird in der Kanalwand eine an die versteifende Einlage anschliessende Einlage aus flexiblem Isoliermaterial vorgesehen, so zeichnet sich eine aus zwei dieser Isolierkanäle gefertigte Nutisolation durch ein besonders vorteilhaftes dielektrisches Verhalten aus. Das dielektrische Verhalten kann zusätzlich noch dadurch verbessert werden, wenn zwischen den mindestens zwei Schichten aus flexiblem Isoliermaterial eine weitere Schicht aus flexiblem Isolermaterial vorgesehen ist aus einem elektrisch höherwertigen, aber mechanisch weniger hoch beanspruchbaren Material.

### KURZE BESCHREIBUNG DER ZEICHNUNGEN

Ein bevorzugtes Ausführungsbeispiel der Erfindung und die damit erzielbaren weiteren Vorteile werden nachfolgend anhand von Zeichnungen näher erläutert. Hierbei zeigt:
- Fig.1: eine Aufsicht auf einen quer zu einer Nut geführten Schnitt durch einen die Nut, eine Nutisolation und einen elektrischen Leiter enthaltenden Teil eines Rotors einer rotierenden elektrischen Maschine, und
- Fig.2: eine Aufsicht auf einen quer zur Nut geführten Schnitt durch einen in der Nutisolation gemäss Fig.1 vorgesehenen, L-förmig ausgebildeten Isolierkanal nach der Erfindung.

### WEG ZUR AUSFÜHRUNG DER ERFINDUNG

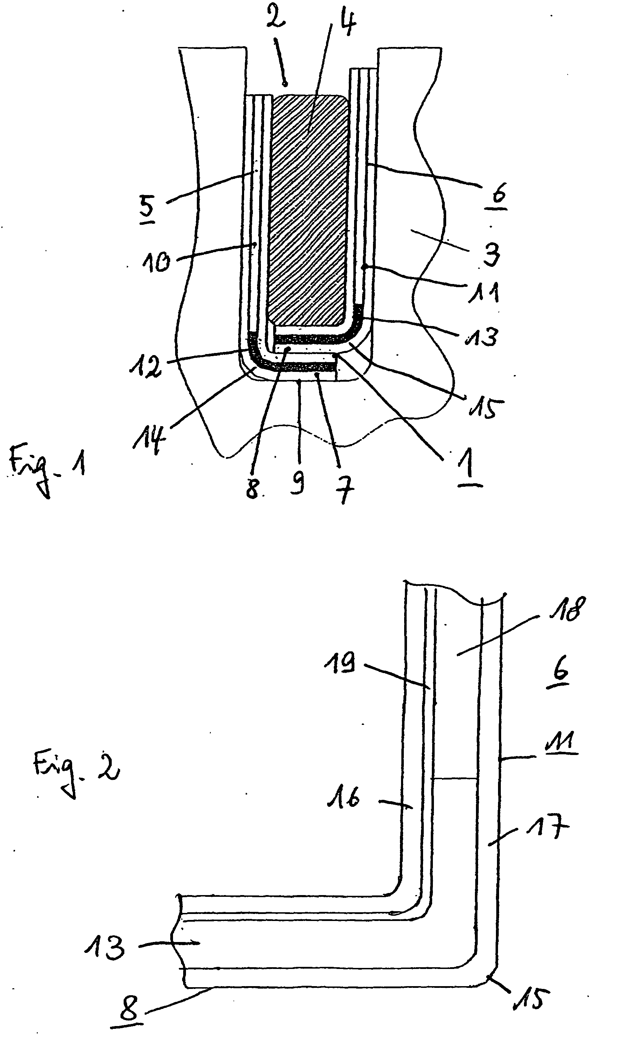

In den Figuren beziehen sich gleiche Bezugszeichen auf gleichwirkende Teile. In Fig. 1 bezeichnet 1 eine in einer Nut 2 eines metallenen Rotors 3 einer rotierenden elektrischen Maschine, beispielsweise eines Hochstromgenerators, eingesetzte Nutisolation mit U-förmigem Querschnitt. Die Nutisolation 1 isoliert einen in die Nut 2 eingesetzten Stromleiter 4 gegenüber dem auf Erdpotential befindlichen Rotor 3. Die Nutisolation 1 enthält zwei L-förmig gewinkelt ausgebildete, gleichartige Isolierkanäle 5 und 6, deren die Basis des L bildende Kanalböden 7, 8 jeweils im Bereich des Nutgrundes 9 gelagert sind.

Die Isolierkanäle sind aus einem im wesentlichen schichtförmig aufgebauten, isolierenden Werkstoff mit einer durch die dielektrischen und mechanischen Eigenschaften der Nutisolation 1 vorgegebenen Werkstoffdicke von typischerweise einem Millimeter gefertigt Der Boden 7 des Isolierkanals 5 ist auf dem Nutgrund 9 gelagert, während eine daran anschliessende und den vertikalen Schenkel des L bildende Kanalwand 10 an die die Nut 2 nach links begrenzende Nutwand geschmiegt ist Der Kanalboden 8 des Isolierkanals 6 ist auf dem Boden 7 des Isolierkanals 5 gelagert. Eine sich an den Kanalboden 8 anschliessende und den vertikalen Schenkel des L bildende, flexible Kanalwand 11 ist an die die Nut 2 nach rechts begrenzende Nutwand geschmiegt. Da die Kanalwände 10, 11 flexibel sind, können sie sich an beliebige Konturen der Nutwand, seien es Stufen oder Abwinkelungen, anschmiegen.

Der durch die beiden Isolierkanäle 5 und 6 gegen den geerdeten Rotor 3 elektrisch isolierte und durch einen nicht dargestellten Nutverschluss festgesetzte Leiter 4 fixiert die beiden Isolierkanäle 5 und 6 in der Nut. In jedem der beiden Kanalböden 7 und 8 ist jeweils eine Einlage 12 bzw. 13 aus einem biegesteifen Material vorgesehen. Jede der beiden Einlagen ist über einen Radius 14 bzw. 15 in den unteren Teil der Kanalwand 10 bzw. 11 des Isolierkanals 5 bzw. 6 geführt.

Wie aus Fig. 2 ersichtlich ist, ist der Isolierkanal schichtförmig aufgebaut und weist zwei den Kanalboden 8 und die Kanalwand 11 bildende Schichten 16, 17 eines flexiblen Isoliermaterials von beispielsweise ca. 0,18 mm Dicke auf. Als Isoliermaterial wird bevorzugt ein hochtemperaturfestes, Fasern und/oder Flocken enthaltendes Papier auf der Basis eines aromatisches Polymers, insbesondere auf der Basis Polyamid, verwendet, wie etwa ein unter dem Markennamen Nomex^{R} im Handel erhältliches Kunststoffpapier. Zwischen den beiden Papierschichten 16, 17 ist die versteifende Einlage 13 vorgesehen. Um den Stromleiter 4 sicher auf dem Nutgrund abzustützen, ist die Einlage gegenüber den Schichten 16 und 17 steif ausgebildet und weist eine Dicke von beispielsweise 0,2 bis 0,5 mm auf. Mit Vorteil wird die Einlage von einem faserverstärkten Kunststoff gebildet, etwa einem mit einem ein- oder mehrlagigen Glasgewebe oder mit einem Glasvlies verstärkten Polyester oder Epoxid.

Die Einlage 13 ist über den Radius 15 in den an den Kanalboden 8 anschliessenden unteren Teil der Kanalwand 11 geführt. Hierdurch wird verhindert, dass bei Betrieb der rotierenden Maschine Teile des L-förmig ausgebildeten Isolierkanals 6, welche nicht durch die Einlage 13 verstärkt sind, aufgrund der Zentrifugalkraft 8 aus dem Bereich des Radius 15 in den oberen Teil der Nut 2, d.h. nach aussen, verlagert werden. Dadurch wird auch nach langer Betriebsdauer eine Beschädigung der Nutisolation 1 vermieden und ist langfristig ein sicherer Betrieb der rotierenden Maschine gewährleistet.

In der Kanalwand 11 stösst an die versteifende Einlage 13 eine Einlage 18 aus flexiblem Isoliermaterial an, welche aus dem gleichen Material besteht wie die Schichten 16 und 17 und etwa die gleiche Dicke, beispielsweise 0,25 mm aufweist, wie die Einlage 13. Die Einlage 18 verbessert die mechanischen und dielektrischen Eigenschaften der Kanalwand 11. Ferner ist zwischen den zwei Schichten 16 und 17 eine Einlage 19 aus flexiblem Isoliermaterial vorgesehen. Dieses Material ist elektrisch höherwertiger, aber mechanisch weniger hoch beanspruchbar als das Material der Schichten 16 und 17 bzw. der Einlage 18. Es enthält vorzugsweise ein Polyimid und wird in Form einer Folie mit einer Dicke vom typischerweise 0,1 mm verwendet. Durch die Schichten 16 und 17 ist diese Einlage gegen äussere Einwirkungen, hervorgerufen insbesondere durch mechanische Kräfte, geschützt.

Der so aufgebaute Isolierkanal wurde am Kanalboden 8, an der Stossstelle der Einlagen 13 und 18 und an der Kanalwand 11 oberhalb der Stossstelle auf Spannungsfestigkeit bei Belastung mit einer Wechselspannnung von 50 Hz geprüft. Hierbei hat es sich gezeigt, dass an den drei genannten Stellen die Spannungsfestigkeit durchweg grösser 20 kV/mm ist und damit einen Wert aufweist, welcher doppelt so hoch ist, wie der er üblicherweise gefordert wird.

Die Isolierkanäle 5 und 6 werden durch Verkleben der einzelnen Schichten und Einlagen mit einem heisshärtenden Harz, beispielsweise einem Epoxid, in einer die L-Form einprägenden Pressform gefertigt. Durch Einsetzen der beiden Kanäle 5 und 6 in die Nut 2 kann in äusserst kostengünstiger Weise die Nutisolation 1 hergestellt werden. Da sich die Kanalwände 10, 11 wegen ihrer flexiblen Ausbildung praktisch an jede beliebige Nutform, gleichgültig ob sie abgewinkelt oder abgestuft ausgeführt ist, anpassen, können mit einem einzigen Typ von L-förmigen Isolierkanälen geometrisch beliebig konfigurierte Nutisolationen gefertigt werden. Hierbei ist es fertigungstechnisch von besonderem Vorteil, dass die Breite der Böden 7, 8 der Isolierkanäle 5, 6, vorm Einsetzen in die Nut 2, etwa durch Sägen, Schneiden oder Stanzen, auf Nutbreite abgelängt werden kann. Eine Vielzahl'von Nutisolationen mit unterschiedlichen Breiten und unterschiedlichen Profilen kann so aus gleichartig ausgebildeten Isolierkanälen gefertigt werden, die in lediglich einer einzigen Pressform hergestellt wurden.

### Bezugszeichenliste

- 1: Nutisolation
- 2: Nut
- 3: Rotor
- 4: Stromleiter
- 5, 6: Isolierkanäle
- 7, 8: Kanalböden
- 9: Nutgrund
- 10, 11: Kanalwände
- 12, 13: Einlagen
- 14, 15: Radien
- 16, 17: Schichten aus Isoliermaterial
- 18: Einlage aus Isoliermaterial
- 19: Folie aus Isoliermaterial

## Patentansprüche

1. Isolierkanal (5, 6) aus einem schichtförmig aufgebauten und nach Art eines L geformten Werkstoff, bei dem die als Kanalboden (7, 8) dienende Basis des L steif und der als Kanalwand (10, 11) dienende Schenkel des L flexibel ausgebildet ist, **dadurch gekennzeichnet, dass** in den Kanalboden (10, 11 ) eine versteifende Einlage (12, 13) eingebracht ist, welche in den an den Kanalboden (7, 8) anschliessenden Teil der Kanalwand (10, 11) geführt ist.

2. Kanal nach Anspruch 1, **dadurch gekennzeichnet, dass** der Werkstoff mindestes zwei im Kanalboden (7, 8) und in der Kanalwand (10, 11) vorgesehene Schichten (16, 17) aus flexiblem Isoliermaterial umfasst, zwischen denen die versteifende Einlage (12,13) vorgesehen ist.

3. Kanal nach Anspruch 2, **dadurch gekennzeichnet, dass** in der Kanalwand (10, 11) eine an die versteifende Einlage (13) anschliessende Einlage (18) aus flexiblem Isoliermaterial vorgesehen ist.

4. Kanal nach einem der Ansprüche 1 bis 3, **dadurch gekennzeichnet, dass** zwischen den mindestens zwei Schichten (16, 17) aus flexiblem Isoliermaterial eine weitere Schicht (19) aus flexiblem Isoliermaterial vorgesehen ist aus einem elektrisch höherwertigen aber mechanisch weniger hoch beanspruchbaren Material.

5. Verfahren zur Herstellung einer in eine Nut (2) eingesetzten Isolation (1), **dadurch gekennzeichnet, dass** aus einer Vielzahl von Isolierkanälen (5, 6) gemäss einem der Ansprüche 1 bis 4 mit gleichen geometrischen Abmessungen und einer gegenüber dem Nutboden (9) grösseren Breite der Kanalböden zunächst die Kanalböden zweier Isolierkanäle abgelängt werden und danach die abgelängten Isolierkanäle (5, 6) unter Bildung eines U-förmigen Isolierkanals in die Nut (2) eingesetzt werden.

## Claims

1. An insulating duct (5, 6) made of a material which is built up in layers and is shaped in the manner of an L, in which the base of the L, which serves as the duct bottom (7, 8), is rigid and that limb of the L which serves as the duct wall (10, 11) is of flexible design, **characterized in that** a reinforcing insert (12, 13) is placed into the duct bottom (10, 11) and is guided into that part of the duct wall (10, 11) which adjoins the duct bottom (7, 8).

2. The duct as claimed in claim 1, **characterized in that** the material comprises at least two layers (16, 17) which are made of flexible insulating material, are provided in the duct bottom (7, 8) and in the duct wall (10, 11) and between which the reinforcing insert (12, 13) is provided.

3. The duct as claimed in claim 2, **characterized in that** an insert (18) which is made of flexible insulating material and adjoins the reinforcing insert (13) is provided in the duct wall (10, 11).

4. The duct as claimed in one of claims 1 to 3, **characterized in that** a further layer (19) which is made of a flexible insulating material of an electrically superior, but mechanically less highly stressable material is provided between the at least two layers (16, 17) made of flexible insulating material.

5. A method for producing an insulating means (1) which is inserted into a slot (2), **characterized in that** from a multiplicity of insulating ducts (5, 6) according to one of claims 1 to 4 having the same geometrical dimensions and a duct-bottom width which is larger than the slot bottom (9), first of all the duct bottoms of two insulating ducts are cut to length and then the cut-to-length insulating ducts (5, 6) are inserted into the slot (2) forming a U-shaped insulating duct.

## Revendications

1. Canal isolant (5, 6) réalisé dans un matériau constitué de couches et en forme de L, dans lequel la base du L servant de fond de canal (7, 8) est rigide et la branche du L servant de paroi de canal (10, 11) est souple, **caractérisé en ce qu'**une couche intermédiaire de renfort (12, 13) est placée dans le fond de canal (7, 8) et est guidée dans la partie de la paroi de canal (10, 11) adjacente au fond de canal (7, 8).

2. Canal selon la revendication 1, **caractérisé en ce que** le matériau comporte au moins deux couches (16, 17) en matériau isolant souple prévues dans le fond de canal (7, 8) et dans la paroi de canal (10, 11) entre lesquelles est prévue la couche intermédiaire de renfort (12, 13).

3. Canal selon la revendication 2, **caractérisé en ce qu'**une couche intermédiaire (18) en matériau isolant souple adjacente à la couche intermédiaire de renfort (13) est prévue dans la paroi de canal (10, 11).

4. Canal selon l'une des revendications 1 à 3, **caractérisé en ce que**, entre les deux couches au moins (16, 17) en matériau isolant souple, est prévue une autre couche (19) en matériau isolant souple de qualité électrique supérieure mais moins résistant mécaniquement.

5. Procédé pour la fabrication d'une isolation (1) placée dans une encoche (2), **caractérisé en ce que**, à partir d'un grand nombre de canaux isolants (5, 6) selon l'une des revendications 1 à 4 de dimensions géométriques identiques et d'une largeur des fonds de canaux plus grande que celle du fond d'encoche (9), les fonds de canaux de deux canaux isolants sont adaptés en longeur dans un premier temps et que, ensuite, les canaux isolants (5, 6) ainsi adaptés en longeur sont placés dans l'encoche (2) en formant un canal isolant en forme de U.
